# EUROPEAN PATENT SPECIFICATION

(11) **EP 3 095 323 B1**
(45) Date of publication and mention of the grant of the patent: **03.10.2018**
(21) Application number: 16178356.8
(22) Date of filing: 13.05.2013
(51) Int. Cl.: A01K 11/00

(54) **ANIMAL IDENTIFICATION EAR TAG**
TIERIDENTIFIKATIONSOHRMARKE
ÉTIQUETTE D'OREILLE D'IDENTIFICATION D'ANIMAUX

(30) Priority: 17.05.2012 NZ 60004812
(43) Date of publication of application: 23.11.2016
(62) Divisional of application: 13167538.1
(73) Proprietor: Allflex Europe, 35500 Vitré (FR)
(72) Inventor: TOWNSEND, Grant, Cleveland, Queensland 4163 (AU); STEWART, James Andrew Nathan, Palmerston North (NZ); DECALUWE, Johan, 53000 Laval (FR); HILPERT, Jean-Jacques, 35500 Vitré (FR)
(74) Representative: Vidon Brevets & Stratégie

(56) References cited:
- EP-A2- 0 014 584
- WO-A1-91/10982
- WO-A1-95/04455
- WO-A1-97/46083
- GB-A- 1 053 454
- US-A- 4 878 302

## Description

### FIELD OF THE INVENTION

The invention relates to animal identification tags.

### BACKGROUND TO THE INVENTION

Ear tags are used for identification of animals. Existing ear tags are usually formed of plastic and include an identifier such as a number, barcode or electronic ID device. Tags include male components with a punch that is forced through the animal's ear by an applicator tool. The tool brings the male punch into alignment with an opening in a female component. The male punch locks into place in the female component, such that the tag is securely coupled to the animal's ear.

Known ear tags include the Applicant's "Flexitag" range, which includes a male pin and a single piece panel extending from a first end of the male pin. The other end of the panel includes an opening that receives the other end of the male pin to form a closed loop after application. This is a simple and cost-effective tag. The tag does not include any electronic component. The Applicant has devised further improvements in construction of the tag attachment mechanism and provision of electronic identification capability.

WO91/10982 and WO95/04455 disclose tags including a similar male pin and single panel configuration, forming a closed loop after application. In each case an electronic tag component may be located within the male pin. The structure of the male pin and the female opening is complex and expensive to manufacture. Further, the tag structure does not adequately protect the electronic components from damage.

US 4 878 302 discloses an animal identification ear tag including a male pin having a first end, a second end configured to penetrate an animal's ear and a locking shoulder positioned adjacent the second end; and a single piece moulded panel including a first portion configured to couple to the first end of the male pin and allowing free rotation of the moulded panel around the male pin, a female portion including an opening configured to receive the second end of the male pin including the locking shoulder, and a panel body extending from the first portion to the female portion. It would be desirable to provide an improved animal ear tag or at least to provide the public with a useful choice.

### SUMMARY OF THE INVENTION

The invention provides an animal identification ear tag according to claim 1. In an example, the present disclosure provides an animal identification ear tag including:
a male pin having a first end, a second end configured to penetrate an animal's ear and a locking shoulder positioned adjacent the second end; and
a single piece moulded panel including:
   a first portion formed integrally with the male pin or configured to couple to the first end of the male pin;
   a female portion including:
      an opening configured to receive the second end of the male pin including the locking shoulder, and
      a plurality of locking projections positioned around the periphery of the opening and extending towards the centre of the opening, the locking projections being configured to cooperate with the locking shoulder to lock the male pin to the female portion after application of the tag to an animal's ear; and
   a panel body extending from the first portion to the female portion.

Preferably the first portion of the moulded panel has a thickness greater than a thickness of the panel body.

Preferably the male pin has a section that is generally frustoconical in cross-section and extends from its widest point at or near the first end of the male pin to its narrowest point along the length of the male pin, thereby providing increased rigidity at the first end of the male pin.

Preferably the ear tag includes a blind bore in the male pin and an electronic tag component arranged in the blind bore. Preferably the blind bore is open at the first end of the male pin. Preferably the electronic tag component is an HDX RFID tag component.

Preferably the electronic tag component is an encapsulated tag component.

Preferably the electronic tag component includes an elongate antenna that resides at least partly within the thickness of the first portion of the moulded panel.

Preferably the ear tag includes a blind bore in the male pin and an electronic tag component arranged in the blind bore, the electronic tag component including an elongate antenna that resides at least partly within the frustoconical section.

Preferably the electronic tag component is smaller than the blind bore, such that the electronic tag component has freedom of movement within the blind bore. Preferably the ear tag further includes a fluid, grease or foam filling a space between the electronic tag component and the wall of the blind bore.

Alternatively, the electronic tag component may be contained within a capsule received in the blind bore, such that the electronic tag component has freedom of movement within the capsule. Preferably the ear tag further includes a fluid, grease or foam filling a space between the electronic tag component and the internal wall of the capsule.

Preferably the ear tag is configured to form a closed loop after application to an animal's ear.

Preferably the locking projections form a generally conical arrangement around the opening.

Preferably the ear tag includes a plurality of slots separating the locking projections.

Preferably the ear tag includes between 3 and 8 locking projections.

Preferably the male pin has an asymmetric cross-section.

Preferably the male pin has an asymmetric cross-section, with a long axis of the cross-section substantially parallel to a line from the male pin to the female portion.

Preferably the male pin has a generally oval cross-section with the long axis of the oval substantially parallel to a line from the male pin to the female portion.

In another example, the present disclosure provides an animal identification ear tag including:
a male pin having a first end, a second end configured to penetrate an animal's ear, a locking shoulder positioned adjacent the second end and a blind bore open at the first end and extending part way along the length of the male pin;
an elongate electronic tag component arranged within the blind bore, with its antenna element extending towards the first end; and
a single piece moulded panel including:
   a panel body extending from the first portion and having a first thickness;
   a thickened portion including an opening configured to couple to the first end of the male pin in a push-fit arrangement, the thickened portion having a thickness greater than the first thickness, at least part of an antenna of the electronic tag component residing in the thickness of the thickened portion; and
   female portion including an opening configured to receive the second end of the male pin including the locking shoulder.

Preferably the thickened portion extends to both sides of the panel body.

Preferably the electronic tag component is smaller than the blind bore, such that the electronic tag component has freedom of movement within the blind bore. Preferably the ear tag further includes a fluid, grease or foam filling a space between the electronic tag component and the wall of the blind bore.

Alternatively, the electronic tag component may be contained within a capsule received in the blind bore, such that the electronic tag component has freedom of movement within the capsule. Preferably the ear tag further includes a fluid, grease or foam filling a space between the electronic tag component and the internal wall of the capsule.

In another example, the present disclosure provides an animal identification ear tag including:
a male pin having a first end, a second end configured to penetrate an animal's ear and a locking shoulder positioned adjacent the second end; and
a single piece moulded panel including:
   a first portion configured to couple to the first end of the male pin and allowing free rotation of the moulded panel around the male pin;
   a female portion including:
      an opening configured to receive the second end of the male pin including the locking shoulder, and
   a panel body extending from the first portion to the female portion.

### BRIEF DESCRIPTION OF THE DRAWINGS

The invention will now be described by way of example only, with reference to the accompanying drawings, in which:
**Figure 1** is a first perspective view of a tag according to one embodiment;
**Figure 2** is a second perspective view of the tag of Figure 1;
**Figure 2A** shows the female component of the tag of Figure 1 in greater detail;
**Figure 3** is a side view of the tag of Figure 1;
**Figure 4** is a front view of the tag of Figure 1;
**Figure 5** is a cross-section along the line 5'-5' shown in Figure 4;
**Figure 6** shows the tag of Figure 1 after application;
**Figure 6A** is a cross-section along the line 6A-6A shown in Figure 6;
**Figure 7** is a cross-section through a tag according to a second embodiment;
**Figure 8** is a cross-section through the tag of Figure 7, after application;
**Figure 9** is a cross-section through a male pin according to a further embodiment;
**Figure 10** is a first perspective view of a tag according to a non-claimed embodiment;
**Figure 11** is a second perspective view of the tag of Figure 10;
**Figure 12** is a perspective view of the male pin of the tag of Figure 10;
**Figure 13** is a second perspective view of the male pin of the tag of Figure 10;
**Figure 14** is a side view of the male pin of the tag of Figure 10;
**Figure 15** is a second side view of the male pin of the tag of Figure 10; and
**Figure 16** is a cross-section through a tag according to a further embodiment.

### DETAILED DESCRIPTION

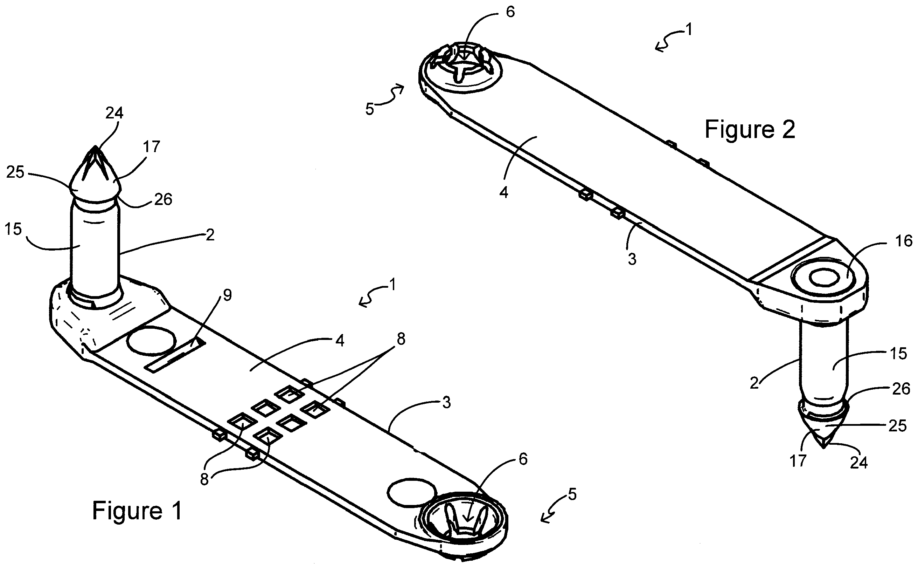

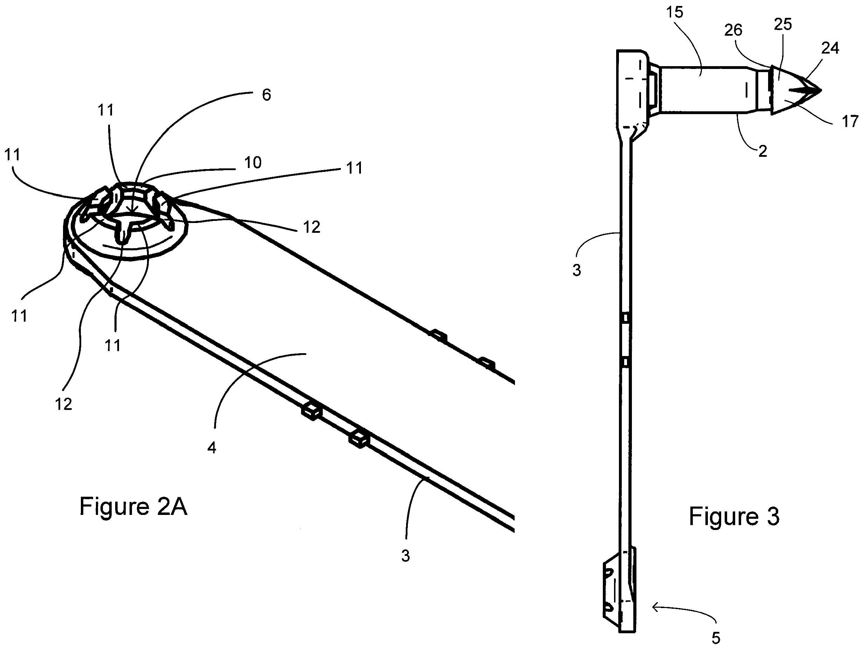

Figures 1 and 2 show an animal identification tag 1. The tag 1 includes a male pin or punch 2 and a panel 3. The panel 3 is formed as a single moulded piece. The panel 3 includes a panel portion 4 and a female portion 5, which includes an opening 6. The panel 3 also includes a number of recesses 8, which provide a local weakening, helping the panel 3 to bend during application, as will become apparent below. Similarly the recess 9 may help bending of the tag near the male pin 2, assisting in application of the tag using an applicator, such as the Flexitag applicators available from Allflex.

As shown in Figures 1 and 2, and in further detail in Figure 2A, the opening 6 is surrounded by a locking flange 10 formed by a number of fingers or projections 11, which project inwards at an angle towards the centre of the opening 6. The fingers 11 therefore form a generally conical arrangement or flange 10, with slots or spaces 12 between the fingers 11. The locking flange and its fingers are also formed integrally as part of the panel 3, in a single moulded piece. In the embodiment shown there are five fingers 11, but any suitable number of fingers may be used. Preferably between 3 and 8 fingers are used.

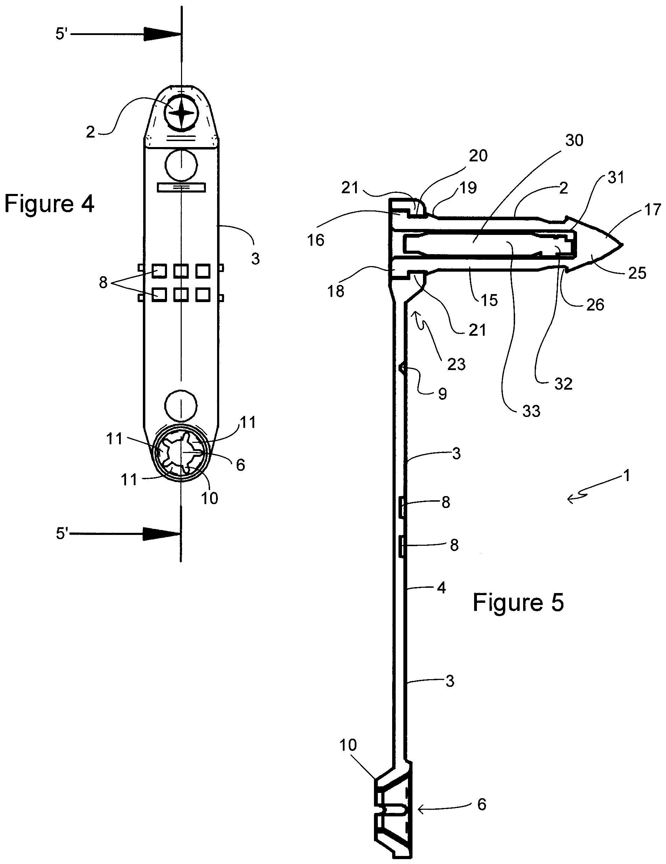

The male pin 2 has a shaft 15, a base portion 16 (see Figure 5) and a distal tip portion 17. The base portion 16 is shaped to couple with an opening in the panel 3, preferably by a push-fit although other couplings may be used. As shown in Figure 5, the base portion 16 includes a base flange 18, and a locking projection 19 defining a groove 20 running around the circumference of the male pin 2. A lip 21 on the panel 3 locks into this groove 20 when the male pin is fully inserted into the panel 3. The male pin 2 and the panel 3 are therefore formed as separate components before assembly into the complete tag 1. However, other examples encompass tags formed by overmoulding or integral forming of the male pin 2 and panel 3.

As shown in Figure 5, the first portion 23 of the panel 3, i.e. that portion surrounding the base of the male pin 2, may be formed as a thicker region than the main part of the panel 3. This thicker region provides improved rigidity at the mounting of the male pin 2 to the panel 3, and may provide improved rigidity to that part of the male pin that resides within the thickness of the panel 3. This increased rigidity improves the performance of the tag, in particular the application of the tag using a plier or automatic applicator. In some embodiments this region may be 5 to 10mm in thickness, preferably around 6-8mm in thickness. In contrast, the thinner sections of the panel 3 may be around 1 to 3 mm, preferably 1 to 2 mm, ideally around 1.25 to 1.45 mm thick.

The distal or tip portion 17 of the male punch may be formed with a sharp tip with a number of sharp ridges 24 (see Figure 1) in order better to penetrate the tissue of an animal's ear during application.

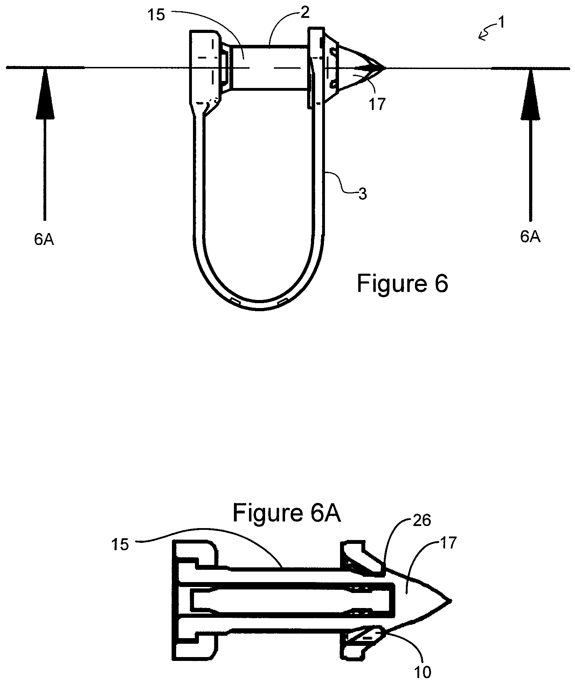

The tip portion 17 has a generally conical section 25 leading to a locking shoulder 26. The locking shoulder 26 cooperates with the locking flange 10 on application of the tag 1 to an animal. An applicator receives the tag 1 in a generally U-shape and drives the male pin through the animal's ear. The conical section 25 passes through the animal's ear and then into the opening 6, forcing the locking fingers 11 to bend slightly, allowing the locking shoulder 26 to pass beyond the locking fingers 11. The locking fingers then return to their natural position, snapping inwards and acting against the locking shoulder 26 as shown in Figure 6. The male pin cannot be retracted from the opening because of the locking of the male pin 2 into the opening 6. The tag then forms the closed U-shape as shown in Figure 6.

Figure 5 also shows the position of an electronic tag component 30. The electronic component 30 sits in a blind bore 31 (i.e. a bore open at only one end) formed in the male pin 2. The blind bore may be open at the base of the male pin 2, and may be sealed after insertion of the electronic tag component using any suitable sealant or plug. The electronic component 30 may be of any desired construction and may or may not be encapsulated in glass or other suitable encapsulation material. In one embodiment the electronic component may include an ID element 32 with an elongate antenna 33 consisting of a conductive wire wound around a core (e.g. copper wire wound around a ferrite core). The electronic tag component may be an HDX (half-duplex) RFID (Radiofrequency identification) tag, but other types of electronic tag component may be used.

Figure 6 shows the ear tag in a closed configuration. During application, the male pin 2 penetrates the animal's ear before entering the female portion of the panel 3, the tag forming a closed loop after application. Figure 6A is a cross-section along the line 6A-6A in Figure 6. Figure 6A shows the locking projections of the conical flange 10 acting against the locking shoulder 26 to lock the male and female components together.

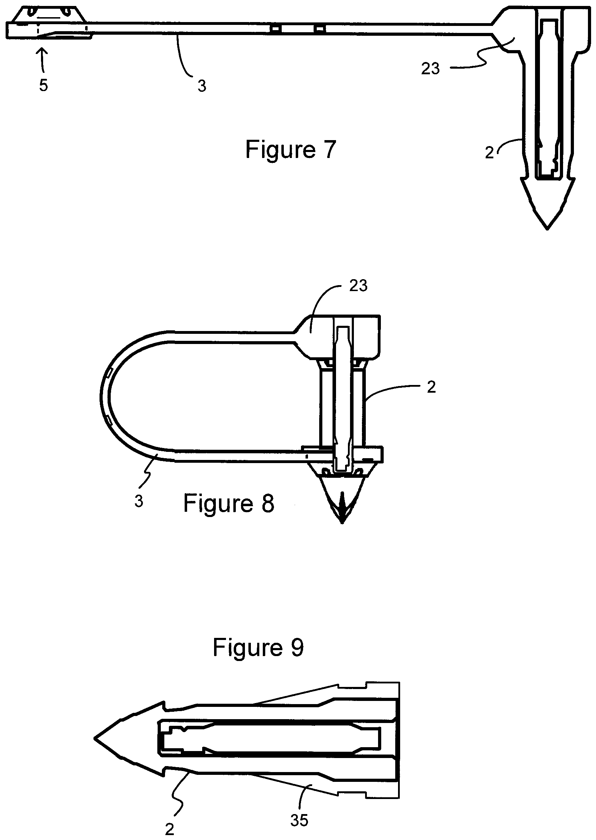

Figure 7 shows a further embodiment, in which the first portion 23 of the panel is formed with still greater thickness. In this tag the male pin has the same length from the opening of the blind bore 31 to the tip. However, the distance from the tip to the plane of the panel 3 is less than in the tag of Figures 1 to 6A. This alters the position of the electronic tag component with respect to the panel 3. The first portion 23 is significantly thickened on both sides of the panel 3. This provides further support to the male pin 2. Furthermore, a larger section of the antenna portion of the electronic tag component resides within the thickness of the first portion 23.

Figure 8 shows the ear tag of Figure 7 in a closed configuration.

Figure 9 shows a further embodiment of male pin 2, which may be used with a panel 3 such as those described above. In this embodiment a frustoconical section 35 extends from the base end of the male pin to a point part way along the male pin 2. This frustoconical section may be formed integrally in a single moulding with the male pin 2 and provides improved rigidity, particularly in the region of the electronic tag component antenna, which resides at least partly within the frustoconical section.

In any embodiment disclosed herein, the panel 3 may be made from polyamide or any other suitable plastic material with some flexibility but sufficient rigidity to form the locking projections 11. The male pin 2 may be made from a hard plastic material in order to pierce the animal's ear and protect the electronic tag component.

The arrangement of the locking projections 11 provides a strong, rigid locking mechanism. However, this arrangement also requires more force to be applied in order to engage the male and female components during application of the tag than is the case for tags with a simple resilient female opening. These greater forces may create undesirable bending of the male component during application, which may lead to damage to the male pin, or to the electronic tag component housed within the male pin. Electronic tag components employing ferrite cores have somewhat fragile antenna sections, particularly when unencapsulated, and such bending of the male pin may damage the antenna, leaving the tag useless. In order to address this problem, the rigidity of the male pin may be improved, or the male pin may be supported, e.g. as described above. Increasing the overall diameter of the male pin is generally undesirable. However, the frustoconical section 35 (see Figure 9) and/or supporting thickness in the region 23 (see Figure 5) may be used to improve rigidity in the male tag, particularly the base section of the male pin where the antenna portion of the electronic tag component resides.

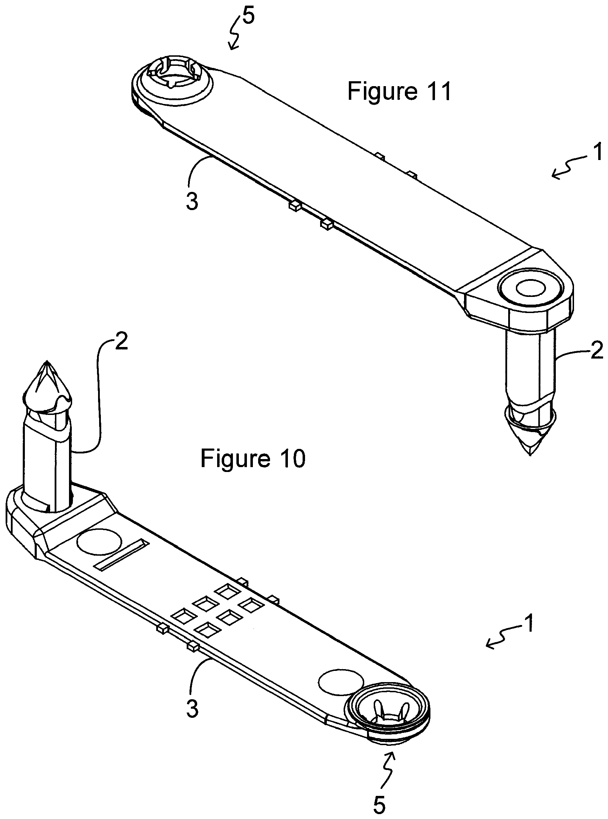

Figures 10 to 15 illustrate a non-claimed embodiment of tag 1. In this embodiment the male pin 2 has an asymmetric cross-section, as will be described below. The electronic tag component may be contained within the hollow male pin, as described above. The panel 3 and other features of the tag are otherwise as described above.

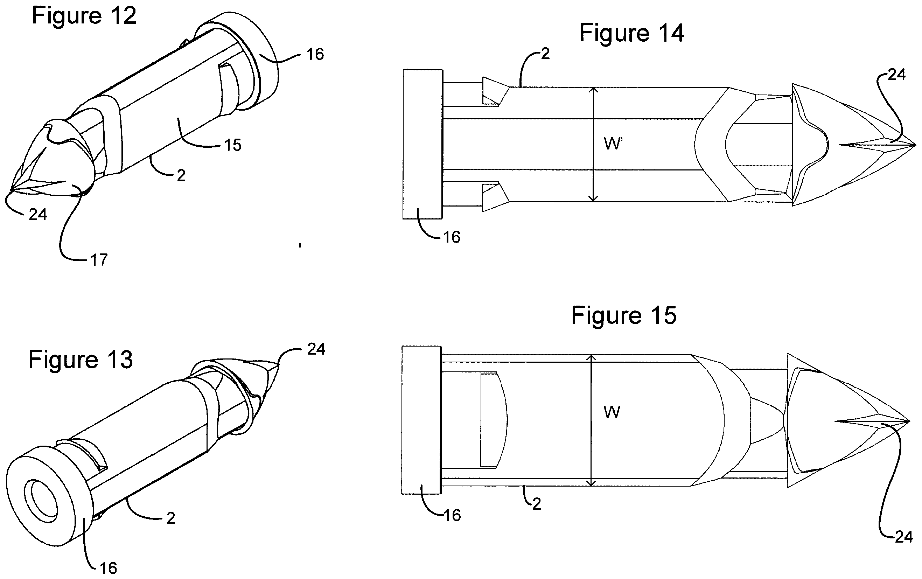

The asymmetric cross-section can be seen in Figures 10 to 13, but is most apparent by comparison of the two side views in Figures 14 and 15. The width W of the male pin 2 in the view of Figure 15 is greater than the width W' in Figure 14. In this embodiment the cross-section is preferably generally elliptical or oval.

As shown in Figure 10, the male pin is preferably arranged in the panel 3 such that the longer axis of its cross-section is parallel to the length of the panel 3, or more generally the long axis of the oval is substantially parallel to a line from the male pin to the female portion of the panel. This can be achieved reliably by forming the base of the male pin and the cooperating opening and portion 21 of the panel 3 with cooperating asymmetric formations to position the male pin correctly. This positioning means that the longer axis is positioned to resist the bending forces created during application of the tag. Less strength is required perpendicular to that axis, as the lateral bending forces are less.

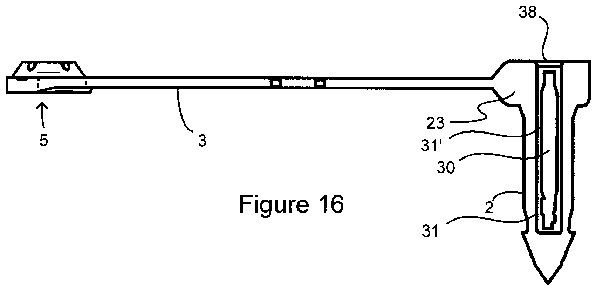

Figures 16 shows a further embodiment of the invention. This embodiment is similar to that of Figures 7 and 8, except for the following points.

In Figure 16, the electronic tag component 30 is positioned within a blind bore 31. In this embodiment the electronic tag component 30 has a size that is significantly smaller than the bore 31. This results in a space 31' surrounding the electronic tag component 30. This can be contrasted with Figure 7, where the electronic tag component fits relatively closely within the bore.

The electronic tag component 30 may simply float within an air space 31' within the bore 31. However, in preferred embodiments the space 31' may be filled with a fluid, viscous substance (such as a grease or gel), a foam material or the like. Preferably the substance allows some movement of the electronic tag component 30. Optionally the space 31' may be sealed by a plug or cap 38. The plug or cap 38 may be secured to the male pin by any suitable attachment means, including but not restricted to; laser welding, hot melt welding, gluing or by some other mechanical means. The plug or cap may be a plastic component that may be formed separately or optionally may be formed as part of the male pin or panel moulding, Alternatively, the plug or cap may be a resin or similar cap formed in situ.

The plug or cap closes the bore 31. Further, the plug or cap 31 may seal the bore to prevent ingress of moisture or other contaminants.

This arrangement provides some freedom of movement of the electronic tag component and helps to cushion the electronic tag component after application of the tag. This will help to prevent damage to the electronic tag component caused by impact or shock stresses. Further, this arrangement limits the bending forces applied to the electronic tag component during application of the tag, because the male pin must bend through a greater angle in order to transmit that bending force to the electronic tag component.

In conventional tags, the RFID transponder is generally encapsulated in glass or a similar material. Inside this is a resin that holds the transponder in a fixed position. The encapsulated transponder is a single, rigid component.

In a further alternative, the electronic tag component may be loosely enclosed in a capsule (formed from e.g. plastic, glass or the like), which may be filled with a fluid, viscous substance (such as a grease or gel), a foam material or the like. In this embodiment the capsule forms a close fit to the bore 31 (as in e.g. Figure 7), but the electronic tag component has some freedom of movement within the capsule. This provides similar benefits to those of the embodiment of Figure 16.

Either of these arrangements of the electronic tag component within the male pin may be used with any of the other embodiments described herein.

In any of the embodiments described above, except the asymmetric pin embodiment of Figures 10-15, the panel is free to rotate with respect to the male pin. This may help to prevent damage to the tag or the animal's ear, for example if the panel catches on a branch or the like.

The Applicant's tag may be particularly suited to identification of sheep, but may also be used for identification of other animals.

While the present invention has been illustrated by the description of the embodiments thereof, and while the embodiments have been described in detail, it is not the intention of the Applicant to restrict or in any way limit the scope of the appended claims to such detail. Additional advantages and modifications will readily appear to those skilled in the art. Therefore, the invention in its broader aspects is not limited to the specific details, representative apparatus and methods, and illustrative examples shown and described. Accordingly, departures may be made from such details without departure from the scope of the invention defined by the appended claims.

## Claims

1. An animal identification ear tag (1) including:
i. a male pin (2) having a first end (16), a second end (17) configured to penetrate an animal's ear and a locking shoulder (26) positioned adjacent the second end; and
ii. a single piece moulded panel (3) including:
a. a first portion (23) configured to couple to the first end of the male pin and allowing free rotation of the moulded panel around the male pin;
b. a female portion (5) including:
an opening (6) configured to receive the second end of the male pin including the locking shoulder, and
c. a panel body (4) extending from the first portion to the female portion,
**characterized in that** the moulded panel is configured to freely rotate with respect to the male pin when the second end of the male pin is received into the opening.

2. An ear tag as claimed in claim 1 wherein the male pin has a section that is generally frustoconical in cross-section and extends from its widest point at or near the first end of the male pin to its narrowest point along the length of the male pin, thereby providing increased rigidity at the first end of the male pin.

3. An ear tag as claimed in any preceding claim including a blind bore in the male pin and an electronic tag component arranged in the blind bore, wherein the blind bore is open at the first end of the male pin.

4. An ear tag as claimed in claim 3 wherein the electronic tag component is an HDX RFID tag component.

5. An ear tag as claimed in claim 3 or 4 wherein the electronic tag component is an encapsulated tag component.

6. An ear tag as claimed in claim 2 including a blind bore in the male pin and an electronic tag component arranged in the blind bore, the electronic tag component including an elongate antenna that resides at least partly within the frustoconical section.

7. An ear tag as claimed in any one of claims 3 to 6, wherein the electronic tag component is smaller than the blind bore.

8. An ear tag as claimed in claim 7, further including a fluid, grease or foam filling a space between the electronic tag component and the wall of the blind bore.

9. An ear tag as claimed in any one of claims 3 to 7 wherein the electronic tag component is contained within a capsule received in the blind bore.

10. An ear tag as claimed in claim 9, further including a fluid, grease or foam filling a space between the electronic tag component and the internal wall of the capsule.

11. An ear tag as claimed in any preceding claim, configured to form a closed loop after application to an animal's ear.

## Patentansprüche

1. Tieridentifizierungsohrmarke (1) umfassend:
i. einen Stift (2), der ein erstes Ende (16), ein zweites Ende (17), das eingerichtet ist, das Ohr eines Tieres zu durchdringen, und einen Verriegelungsansatz (26), der angrenzend an das zweite Ende positioniert ist, aufweist; und
ii. eine einzelstückgeformte Platte (3), umfassend:
a. einen ersten Teil (23), der eingerichtet ist, mit dem ersten Ende des Stifts verbunden zu werden und eine freie Rotation der geformten Platte um den Stift erlaubt;
b. einen Buchsenbereich (5), umfassend:
eine Öffnung (6), die eingerichtet ist, das zweite Ende des Stifts, umfassend den Verriegelungsansatz, zu empfangen und
c. einen Plattenkörper (4), der sich von dem ersten Bereich zum Buchsenbereich erstreckt,
**dadurch gekennzeichnet, dass** die geformte Platte eingerichtet ist, frei bezogen auf den Stift zu rotieren, wenn das zweite Ende des Stifts in der Öffnung empfangen wurde.

2. Ohrmarke nach Anspruch 1, wobei der Stift einen Abschnitt aufweist, der im Wesentlichen kegelstumpfförmig im Querschnitt ist und sich von seinem breitesten Punkt an oder nahe dem ersten Ende des Stifts zu seinem schmalsten Punkt entlang der Länge des Stifts erstreckt, wodurch eine erhöhte Festigkeit am ersten Ende des Stifts bereitgestellt wird.

3. Ohrmarke nach einem der vorhergehenden Ansprüche, umfassend eine Blindbohrung im Stift und eine elektronische Markenkomponente, die in der Blindbohrung angeordnet ist, wobei die Blindbohrung offen am ersten Ende des Stifts ist.

4. Ohrmarke nach Anspruch 3, wobei die elektronische Markenkomponente eine HDX-RFID-Markenkomponente ist.

5. Ohrmarke nach Anspruch 3 oder 4, wobei die elektronische Markenkomponente eine eingekapselte Markenkomponente ist.

6. Ohrmarke nach Anspruch 2, umfassend eine Blindbohrung im Stift und eine elektronische Markenkomponente, die in der Blindbohrung angeordnet ist, wobei die elektronische Markenkomponente eine gestreckte Antenne aufweist, die sich zumindest teilweise innerhalb des kegelstumpfförmigen Bereichs befindet.

7. Ohrmarke nach einem der Ansprüche 3 bis 6, wobei die elektronische Markenkomponente kleiner als die Blindbohrung ist.

8. Ohrmarke nach Anspruch 7, ferner umfassend ein Fluid, Fett oder Schaum, der den Platz zwischen der elektronischen Markenkomponente und der Wand der Blindbohrung füllt.

9. Ohrmarke nach einem der Ansprüche 3 bis 7, wobei die elektronische Markenkomponente innerhalb einer Kapsel enthalten ist, die von der Blindbohrung empfangen wird.

10. Ohrmarke nach Anspruch 9, ferner umfassend ein Fluid, Fett oder Schaum, das den Platz zwischen der elektronischen Markenkomponente und der inneren Wandung der Kapsel füllt.

11. Ohrmarke nach einem der vorhergehenden Ansprüche, die eingerichtet ist, eine geschlossene Schleife nach der Anbringung an ein Ohr eines Tier zu bilden.

## Revendications

1. Étiquette d'oreille (1) pour identification d'animaux incluant :
i. une broche mâle (2) ayant une première extrémité (16), une seconde extrémité (17) configurée pour pénétrer l'oreille d'un animal et un épaulement de verrouillage (26) positionné adjacent à la seconde extrémité ; et
ii. un panneau (3) moulé d'un seul tenant incluant :
a. une première portion (23) configurée pour se coupler à la première extrémité de la broche mâle et permettant une libre rotation du panneau moulé autour de la broche mâle ;
b. une portion femelle (5) incluant :
une ouverture (6) configurée pour recevoir la seconde extrémité de la broche mâle incluant l'épaulement de verrouillage, et
c. un corps de panneau (4) s'étendant de la première portion à la portion femelle,
**caractérisée en ce que** le panneau moulé est configuré pour tourner librement par rapport à la broche mâle lorsque la seconde extrémité de la broche mâle est reçue dans l'ouverture.

2. Étiquette d'oreille selon la revendication 1, dans laquelle la broche mâle a une section qui est de section transversale généralement tronconique et s'étend de son point le plus large à ou près de la première extrémité de la broche mâle à son point le plus étroit suivant la longueur de la broche mâle, conférant ainsi une rigidité accrue au niveau de la première extrémité de la broche mâle.

3. Étiquette d'oreille selon l'une quelconque des revendications précédentes, incluant un alésage borgne dans la broche mâle et un composant d'étiquette électronique agencé dans l'alésage borgne, dans laquelle l'alésage borgne est ouvert au niveau de la première extrémité de la broche mâle.

4. Étiquette d'oreille selon la revendication 3, dans laquelle le composant d'étiquette électronique est un composant d'étiquette RFID HDX.

5. Étiquette d'oreille selon la revendication 3 ou 4, dans laquelle le composant d'étiquette électronique est un composant d'étiquette encapsulé.

6. Étiquette d'oreille selon la revendication 2, incluant un alésage borgne dans la broche mâle et un composant d'étiquette électronique agencé dans l'alésage borgne, le composant d'étiquette électronique incluant une antenne allongée qui réside au moins en partie au sein de la section tronconique.

7. Étiquette d'oreille selon l'une quelconque des revendications 3 à 6, dans laquelle le composant d'étiquette électronique est plus petit que l'alésage borgne.

8. Étiquette d'oreille selon la revendication 7, incluant en outre un fluide, une graisse ou une mousse remplissant un espace entre le composant d'étiquette électronique et la paroi de l'alésage borgne.

9. Étiquette d'oreille selon l'une quelconque des revendications 3 à 7, dans laquelle le composant d'étiquette électronique est contenu au sein d'une capsule reçue dans l'alésage borgne.

10. Étiquette d'oreille selon la revendication 9, incluant en outre un fluide, une graisse ou une mousse remplissant un espace entre le composant d'étiquette électronique et la paroi interne de la capsule.

11. Étiquette d'oreille selon l'une quelconque des revendications précédentes, configurée pour former une boucle fermée après application à l'oreille d'un animal.
